# FASCICULE DE BREVET EUROPEEN

(11) **EP 4 713 255 B1**
(45) Date de publication et mention de la délivrance du brevet: **12.08.2026**
(21) Numéro de dépôt: 25709391.4
(22) Date de dépôt: 06.03.2025
(51) Int. Cl.: B64G 1/28, B64G 1/32, B64G 1/36, B64G 1/24

(54) **PROCEDE DE CONTROLE D'ATTITUDE EN MODE SURVIE D'UN SATELLITE EMBARQUANT UN INSTRUMENT SENSIBLE AU RAYONNEMENT SOLAIRE**
VERFAHREN ZUR LAGESTEUERUNG IM ÜBERLEBENSMODUS EINES SATELLITEN MIT EINEM SONNENSTRAHLUNGSEMPFINDLICHEN INSTRUMENT
METHOD FOR CONTROLLING ATTITUDE IN SURVIVAL MODE FOR A SATELLITE CARRYING AN INSTRUMENT SENSITIVE TO SOLAR RADIATION

(30) Priorité: 26.03.2024 FR 2402811
(43) Date de publication de la demande: 25.03.2026
(73) Titulaire: Airbus Defence and Space SAS, 31402 Toulouse Cedex 4 (FR); Centre National d'Etudes Spatiales, 75001 Paris (FR)
(72) Inventeur: JULLIEN, Alexandre, 31402 TOULOUSE CEDEX 4 (FR); TRIMOREAU, Guillaume, 31402 TOULOUSE CEDEX 4 (FR); SEPTIER, Romain, 31402 TOULOUSE CEDEX 4 (FR); LANDRON, Pierre, 31402 TOULOUSE CEDEX 4 (FR)
(74) Mandataire: Plasseraud IP
(86) Numéro de dépôt international: PCT/EP2025/056112
(87) Numéro de publication internationale: WO 2025/201831

(56) Documents cités:
- EP-A1- 3 744 645
- EP-B1- 2 690 020
- EP-B1- 3 921 235
- US-A- 5 248 118
- US-A- 5 259 577

## Description

### Domaine technique

La présente divulgation relève du domaine du contrôle d'attitude de satellites en orbite géocentrique, et concerne plus particulièrement le contrôle d'attitude de satellite en mode survie en orbite basse, où le satellite embarque un instrument sensible au rayonnement solaire.

### Technique antérieure

Dans la présente demande, on entend par « mode survie » tout mode de contrôle d'attitude d'un satellite visant, à partir d'un état initial perturbé, à assurer un ensoleillement des générateurs solaires qui soit suffisant pour garantir l'autonomie électrique d'une plateforme dudit satellite jusqu'à son rétablissement dans un état proche des conditions opérationnelles nominales.

Ainsi, le mode survie peut être mis en œuvre immédiatement après séparation du lanceur pour l'acquisition initiale du Soleil et/ou après que la mission du satellite a débuté sur son orbite de mission, en cas d'incident quelconque nécessitant d'interrompre la mission comme par exemple une défaillance d'un équipement tel qu'un propulseur.

Pour un satellite en mode survie en orbite basse, équipé à la fois de magnéto-coupleurs et de volants d'inertie, il est connu de la demande de brevet EP 0778201 A1 de contrôler l'attitude en utilisant notamment une loi de contrôle des magnéto-coupleurs dite « en B point », pour indiquer qu'elle fait intervenir la dérivée du champ magnétique terrestre B.

Suivant cette loi en B point, on mesure le champ magnétique terrestre suivant les trois axes d'un repère satellite, on dérive les mesures par rapport au temps, puis on multiplie les dérivées par un gain et on fait passer un courant représentatif du résultat dans des magnéto-coupleurs pour créer des moments magnétiques internes qui tendent à arrêter les variations du champ magnétique terrestre dans le repère satellite, de sorte que le satellite suit les lignes du champ magnétique terrestre. Ainsi, pour une orbite polaire, la loi en B point provoque finalement la rotation du satellite sur lui-même à une vitesse égale, en repère inertiel, à deux fois la pulsation orbitale (c'est-à-dire que le satellite effectue deux tours sur lui-même par orbite) autour d'un axe orthogonal au plan de l'orbite.

En outre, les volants d'inertie sont commandés pour former un moment cinétique interne, dit « moment cinétique de survie », suivant un axe prédéterminé en repère satellite. Du fait de ce moment cinétique de survie formé par les volants d'inertie, et du fait que la loi en B point pour contrôler les magnéto-coupleurs, le satellite va naturellement s'orienter de sorte à tourner sur lui-même autour de l'axe du moment cinétique de survie. En d'autres termes, le satellite s'oriente de sorte à avoir l'axe du moment cinétique de survie orthogonal au plan de l'orbite du satellite. Afin de maximiser l'ensoleillement moyen des générateurs solaires, l'axe du moment cinétique de survie peut être prédéterminé en fonction de l'heure locale de l'orbite du satellite.

On connaît également du brevet EP 3 921 235 B1 un procédé de contrôle d'orbite de satellite en mode survie mettant également en œuvre une loi en B point et comprenant en outre une étape de recherche du Soleil au moyen d'un senseur solaire, permettant de détecter si le satellite se trouve en phase de visibilité du Soleil et, lorsqu'une phase de visibilité du Soleil est détectée, une étape de contrôle d'attitude mettant en œuvre une loi de contrôle des magnéto-coupleurs en B point, et lors de laquelle les actionneurs inertiels sont également commandés pour former des couples visant à placer et maintenir le satellite dans une attitude dans laquelle le générateur soleil du satellite est dirigé vers le Soleil.

Dans le cas où le satellite comprend au moins un instrument sensible au rayonnement solaire, et notamment un instrument optique, la mise en œuvre de ces lois de contrôle d'attitude peut présenter un risque d'endommagement de l'instrument, lié à des éblouissements de l'instrument à faible vitesse. En effet, la mise en œuvre d'une loi en B point a typiquement pour effet de réduire la vitesse de rotation inertielle du satellite, jusqu'à converger à la vitesse de rotation égale à deux fois la pulsation orbitale, comme indiqué ci-avant. Pendant cette période, l'orientation du satellite varie, et il peut notamment se produire que l'axe de visée de l'instrument optique soit orienté vers le soleil, ce qui cause un éblouissement de l'instrument.

On définit l'éblouissement d'un instrument comme une période où le flux solaire, direct ou réfléchi, est incident sur une zone sensible de l'instrument (typiquement, s'agissant d'un instrument optique, la zone sensible peut comprendre les composants optiques tels que lentilles et miroirs, ainsi que les composants électroniques, dont les capteurs opto-électroniques). Or, en cas d'éblouissement à basse vitesse, la durée pendant laquelle l'instrument est ébloui augmente et peut aboutir à une élévation thermique préjudiciable pour l'instrument.

### Résumé

La présente divulgation a pour objectif de remédier à tout ou partie des limitations des solutions de l'art antérieur, notamment celles exposées ci-avant, en proposant un contrôle d'attitude d'un satellite en mode survie embarquant un instrument sensible au rayonnement solaire, qui réduit fortement les risques d'endommagement de l'instrument embarqué liés à un éblouissement lent, c'est-à-dire trop long, de l'instrument embarqué.

A cet égard, il est proposé un procédé selon la revendication 1.

Ainsi, le procédé de contrôle d'attitude proposé comprend la mesure de la vitesse de rotation inertielle du satellite au moyen d'un gyroscope, et, en cas de détection d'une vitesse de rotation inertielle faible, la commande des actionneurs inertiels pour augmenter cette vitesse de rotation inertielle.

Ce procédé est mis en œuvre quelle que soit l'orientation de l'instrument, et ne nécessite donc pas de connaître la position du soleil par rapport à l'instrument. Cependant, elle permet d'éliminer les risques d'endommagement de l'instrument lié à un éblouissement, en assurant une vitesse de rotation inertielle minimale pour le satellite. Ainsi, lorsqu'un éblouissement a lieu, le contrôle de la vitesse de rotation inertielle permet de réduire le temps d'exposition des composants sensibles de l'instrument à une durée suffisamment faible pour ne pas risquer de surchauffe ou d'endommagement.

Puisque la commande des actionneurs inertiels n'a lieu que lorsque la vitesse de rotation inertielle est inférieure à un seuil de déclenchement déterminé, et qu'elle est réalisée selon la vitesse de rotation inertielle du satellite, la commande des actionneurs demeure peu perturbatrice sur l'attitude finale du satellite. Le contrôle d'attitude selon l'invention reste notamment sans incidence sur le comportement attendu à long terme d'une loi en B point.

Dans des modes de réalisation, lorsque la vitesse de rotation inertielle mesurée est inférieure au seuil de déclenchement prédéterminé, les actionneurs inertiels sont commandés pour générer un moment cinétique incrémental de norme et de direction déterminées.

Dans des modes de réalisation, la norme du moment cinétique incrémental est une fonction décroissante de la vitesse mesurée, comprise entre une valeur maximale d'incrément et une valeur nulle quand la vitesse de rotation inertielle mesurée est égale au seuil de déclenchement.

Dans des modes de réalisation, la fonction décroissante de la vitesse mesurée est continue en la valeur de vitesse de rotation inertielle correspondant au seuil de déclenchement sur au moins deux ordres de dérivation. Par exemple, la fonction décroissante de la vitesse mesurée est une fonction puissance d'ordre au moins 2 ou une fonction exponentielle.

Dans des modes de réalisation, la norme du moment cinétique incrémental est constante et égale à la valeur maximale lorsque la vitesse de rotation inertielle mesurée est inférieure ou égale à un deuxième seuil, inférieur au seuil de déclenchement.

Selon l'invention, la valeur de la vitesse de rotation inertielle correspondant au seuil de déclenchement est déterminée en fonction d'un temps maximal autorisé d'exposition de l'instrument optique au soleil.

Dans des modes de réalisation, les étapes de mesure et de commande des actionneurs inertiels sont itératives, et la direction du moment cinétique incrémental est égale à l'inertie satellite multipliée par la direction de vitesse de rotation naturelle du satellite, correspondant à la direction de la vitesse de rotation inertielle mesurée du satellite de laquelle est déduit le moment cinétique incrémental appliqué à la précédente itération de l'étape de commande des actionneurs inertiels.

Dans des modes de réalisation, les étapes de mesure et de commande des actionneurs inertiels sont itératives et, lorsque la vitesse de rotation inertielle mesurée est inférieure à un seuil de sécurité inférieur au seuil de déclenchement, la direction du moment cinétique incrémental est la dernière direction de moment cinétique incrémental déterminée lors d'une itération précédente de l'étape de commande des actionneurs inertiel.

Dans des modes de réalisation, lorsque la vitesse de rotation inertielle mesurée devient supérieure au seuil de sécurité, la direction du moment cinétique incrémental est déterminée par interpolation temporelle entre la dernière direction de moment cinétique incrémental commandée aux actionneurs inertiels et la direction de vitesse de rotation naturelle du satellite.

Dans des modes de réalisation, la loi de contrôle est une loi en B point biaisée.

Selon un autre objet, il est proposé un satellite destiné à être placé en orbite basse inclinée, comportant au moins un instrument sensible au rayonnement solaire, des magnéto-coupleurs adaptés à former des moments magnétiques internes dans un repère satellite, des actionneurs inertiels adaptés à former des moments cinétiques internes dans ledit repère satellite et des magnétomètres adaptés à mesurer le champ magnétique terrestre, ledit satellite étant caractérisé en ce qu'il comporte en outre un équipement de mesure d'une vitesse de rotation inertielle du satellite et un module de commande des magnéto-coupleurs et des actionneurs inertiels, ledit module de commande étant configuré pour mettre en œuvre un procédé de contrôle d'attitude en mode survie selon la description qui précède.

Dans des modes de réalisation, les actionneurs inertiels sont des roues à réaction.

Dans des modes de réalisation, l'équipement de mesure d'une vitesse de rotation inertielle du satellite est un gyroscope.

Selon un autre objet, il est décrit un produit programme d'ordinateur, caractérisé en ce qu'il comporte un ensemble d'instructions de code de programme qui, lorsqu'elles sont exécutées par un processeur d'un module de commande d'un satellite, configurent ledit module de commande pour mettre en œuvre le procédé de contrôle d'attitude en mode survie selon la description qui précède.

### Brève description des dessins

D'autres caractéristiques, détails et avantages apparaîtront à la lecture de la description détaillée ci-après, et à l'analyse des dessins annexés, sur lesquels :
Fig. 1

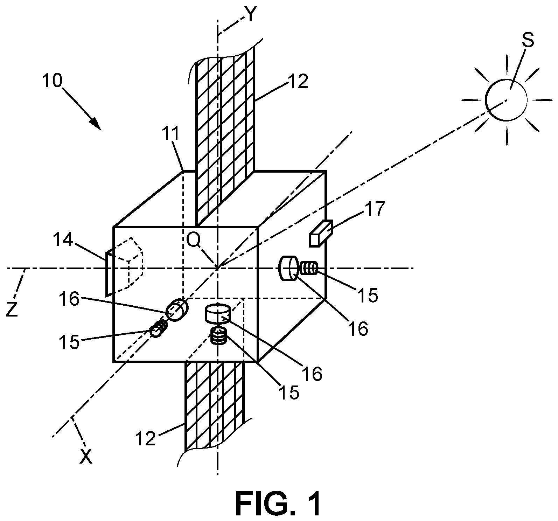

   [Fig. 1] est une représentation schématique d'un mode de réalisation d'un satellite.
Fig. 2

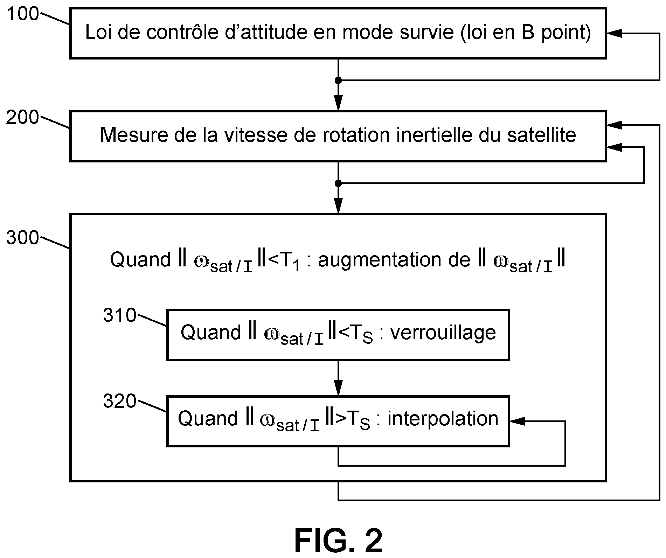

   [Fig. 2] représente schématiquement les principales étapes d'un procédé de contrôle d'attitude en mode survie selon un mode de réalisation
Fig. 3

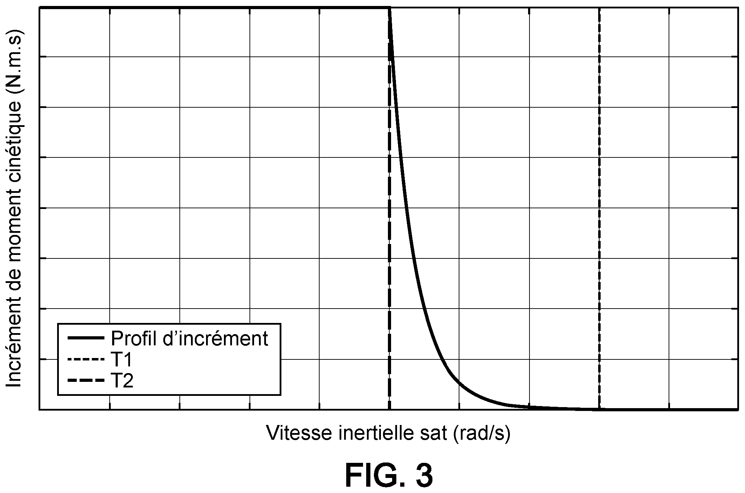

   [Fig. 3] représente un exemple d'évolution de la norme de l'incrément de vitesse apporté au satellite en fonction de la vitesse inertielle mesurée.
**Fig. 4a**

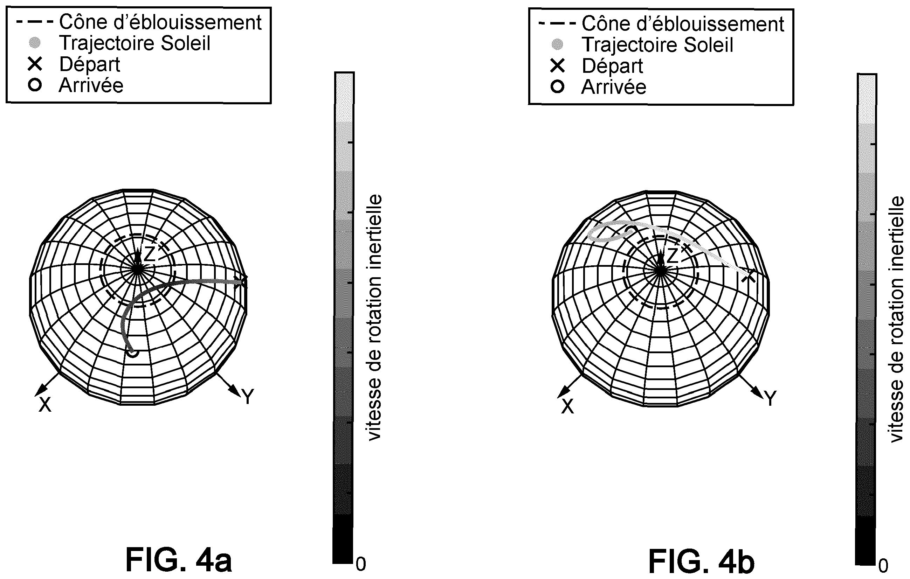

   [Fig. 4a] représente un exemple de trajectoire du Soleil par rapport à un cône d'éblouissement d'un instrument, sans la mise en œuvre du procédé de contrôle d'attitude.
**Fig. 4b**
   [Fig. 4b] représente la trajectoire du Soleil par rapport à un cône d'éblouissement d'un instrument, à partir de conditions cinématiques initiales similaires, avec la mise en œuvre du procédé de contrôle d'attitude.

### Description des modes de réalisation

La présente invention concerne le contrôle d'attitude d'un satellite 10 en mode survie en orbite géocentrique basse.

Tel qu'indiqué précédemment, dans la présente demande, le mode survie est un mode de contrôle d'attitude mis en œuvre immédiatement après séparation du lanceur et/ou après que la mission du satellite 10 a débuté, en cas d'incident quelconque nécessitant d'interrompre la mission (collision avec une météorite, défaillance d'un propulseur, etc.)

Par « orbite basse », on entend que l'altitude maximale du satellite 10 est telle que le champ magnétique terrestre local est non négligeable et permet la mise en œuvre de magnéto-coupleurs pour contrôler l'attitude dudit satellite. En pratique, cette condition est vérifiée notamment lorsque l'altitude maximale du satellite est inférieure à 2000 kilomètres.

Dans la suite, on utilise la notion de repère inertiel, c'est-à-dire de repère de référence dans lequel le principe d'inertie, selon lequel tout corps ponctuel libre perdure dans un mouvement rectiligne uniforme, est vérifié. En pratique, pour un satellite en orbite autour de la Terre, on peut considérer par approximation qu'un repère géocentrique, c'est-à-dire un repère centré sur le centre de la Terre, et comprenant trois axes orthogonaux pointant vers trois étoiles suffisamment éloignées de la Terre pour apparaître fixes (pour la période de temps considérée lors de la mise en œuvre du procédé), est un repère inertiel. On peut également considérer en tant que repère inertiel un repère héliocentrique, c'est-à-dire un repère centré sur le centre du Soleil, et comprenant trois axes orthogonaux pointant vers trois étoiles suffisamment éloignées du Soleil pour apparaître fixes (pour la période de temps considérée lors de la mise en œuvre du procédé).

La figure 1 représente schématiquement un exemple de réalisation d'un satellite 10 selon l'invention.

On associe au satellite 10 un repère satellite, par exemple centré sur un centre de masse O du satellite 10, comportant trois axes X, Y et Z orthogonaux entre eux. Le repère satellite est lié au satellite 10, c'est-à-dire qu'il est entièrement défini par la géométrie du satellite 10, et que toute rotation du satellite en repère inertiel se traduit par une rotation équivalente du repère satellite en repère inertiel.

Le satellite comporte un corps 11. Dans l'exemple non limitatif représenté sur la figure 1, le corps 11 est sensiblement en forme de parallélépipède rectangle. Le satellite comprend également au moins un générateur solaire 12, et typiquement deux générateurs solaires agencés de part et d'autre dudit corps. Le nombre de générateurs solaires portés par le satellite n'est cependant pas limitatif.

Le satellite comprend également au moins un instrument 14 sensible au rayonnement solaire. Par exemple, l'instrument 14 peut être un instrument optique. Lorsque le satellite se trouve à poste, l'axe de visée de l'instrument optique peut être orienté vers la Terre, pour une mission d'observation de la Terre. Cependant, comme indiqué ci-avant, lors du mode survie, les rotations du satellite en repère inertiel peuvent amener à orienter les composantes sensibles au rayonnement solaire de l'instrument 14 - en particulier, pour un instrument optique, l'axe de visée - vers le Soleil, causant ainsi un éblouissement et un échauffement de ces composantes sensibles.

Le satellite comporte également plusieurs actionneurs mis en œuvre pour le contrôle d'attitude. Notamment, le satellite comporte un ensemble de magnéto-coupleurs 15 adaptés à former un moment magnétique interne d'axe quelconque dans le repère satellite.

Le satellite comporte également un ensemble d'actionneurs inertiels 16, tels que des roues de réaction ou des actionneurs gyroscopiques, adaptés à former des moments cinétiques internes dans le repère satellite.

En outre, le satellite comporte un équipement 17 de mesure de la vitesse inertielle du satellite, par exemple un gyroscope. Alternativement, l'équipement 17 peut également être un senseur stellaire, adapté pour mesurer les coordonnées d'une ou plusieurs étoiles dans le repère satellite, permettant la mesure d'une vitesse inertielle du satellite à partir du déplacement des étoiles visées mesuré par le senseur.

Le satellite 10 comporte en outre un module de commande (non représenté sur les figures) adaptés à commander les magnéto-coupleurs et les actionneurs inertiels.

Le module de commande comporte par exemple au moins un processeur et au moins une mémoire dans laquelle est mémorisé un produit programme d'ordinateur, sous la forme d'un ensemble d'instructions de code de programme à exécuter pour mettre en œuvre les différentes étapes d'un procédé de contrôle d'attitude du satellite en mode survie décrit ci-après. Dans une variante, le module de commande comporte un ou des circuits logiques programmables de type FPGA, PLD, etc., et/ou des circuits intégrés spécialisés (ASIC) adaptés à mettre en œuvre tout ou partie des étapes du procédé 50 de contrôle d'attitude dudit satellite 10 en mode survie.

En d'autres termes, le module de commande comporte un ensemble de moyens configurés de façon logicielle (produit programme d'ordinateur spécifique) et/ou matérielle (FPGA, PLD, ASIC, etc.) pour mettre en œuvre le procédé de contrôle d'attitude du satellite 10 en mode survie.

En référence à la figure 2, on va maintenant décrire les principales étapes d'un procédé de contrôle d'attitude en mode survie du satellite 10 selon des modes de réalisation.

Le contrôle d'attitude en mode survie comprend des étapes de :
- Mise en œuvre 100 d'un contrôle d'attitude utilisant une loi de contrôle,
- Mesure 200 d'une vitesse de rotation inertielle du satellite lors de la mise en œuvre de ladite loi de contrôle, et
- Augmentation 300 de la norme de la vitesse de rotation inertielle du satellite lorsque celle-ci, obtenue à l'étape de mesure, devient inférieure à un seuil de déclenchement prédéterminé.

Lors de l'étape 100, la loi de contrôle qui est mise en œuvre comprend la commande des magnéto-coupleurs 15, en fonction de valeurs locales du champ magnétique terrestre, pour former des moments magnétiques internes dans le repère satellite, visant à limiter les variations du champ magnétique terrestre dans le repère satellite. Les valeurs locales du champ magnétique terrestre peuvent être fournies par des mesures effectuées par un ou plusieurs magnétomètres (non représentés sur les figures), ou par des estimations fournies par un modèle de champ magnétique terrestre qui reçoit en entrée la position du satellite 10. Cette position peut être estimée au moyen d'un récepteur GNSS (« Global Navigation Satellite System") tel qu'un récepteur GPS (« Global Positioning System »), non représenté sur les figures.

La loi de contrôle comprend également la commande de la génération d'un moment cinétique interne au satellite selon un axe déterminé, et d'une norme minimum fonction d'au moins l'inertie du satellite. Ce moment cinétique interne peut par exemple être généré par les actionneurs inertiels du satellite. Du fait de ce moment cinétique suivant un axe prédéterminé, et des moments magnétiques internes générés par les magnéto-coupleurs 15, le satellite s'oriente naturellement de sorte à tourner sur lui-même autour de l'axe du moment cinétique.

Dans des modes de réalisation, la loi de contrôle est une loi dite en B point biaisée, ou utilisant une loi en B point biaisée.

Selon la loi en B point biaisée, le moment magnétique interne généré par les magnéto-coupleurs 15 comprend un terme proportionnel à la dérivée des valeurs locales du champ magnétique terrestre, et un biais, qui est un terme proportionnel à un produit vectoriel entre le champ magnétique terrestre local et un vecteur déterminé, dont le gain est déterminé en fonction de la vitesse de rotation sur lui-même à laquelle on veut aboutir pour le satellite.

La loi en B point biaisée peut par exemple être exprimée comme suit : $\vec{{M}_{MTQ}} = - {K}_{B} ⋅ \left[\frac{d \vec{b}}{dt}+\vec{{ω}_{CTRL}}\times \vec{b}\right]$ Expression dans laquelle :
- *̅M̅_̅{̅M̅T̅Q̅}̅*̅ correspond au moment magnétique interne formé par les magnéto-coupleurs,
- *K_{B}* correspond à un gain strictement positif prédéterminé,
- $\frac{d \vec{b}}{dt}$ est la dérivée du champ magnétique terrestre unitaire *̅b̅*̅ mesuré ou estimé dans le repère satellite, qui est égal à *̅B̅*̅/∥*̅B̅*̅∥ où *̅B̅*̅ est le champ magnétique terrestre mesuré ou estimé dans le repère satellite,
- *̅ω̅_̅{̅C̅T̅R̅L̅}̅*̅ est un vecteur prédéterminé, et × désigne le produit vectoriel.

En l'absence du biais, l'application de la loi en B point provoque la rotation du satellite sur lui-même à une vitesse égale, en repère inertiel, à deux fois la pulsation orbitale autour de l'axe du moment cinétique. Le biais augmente cette vitesse de rotation. Le gain *ω_{CTRL}* (qui est la norme du vecteur) peut être déterminé pour aboutir à une vitesse de rotation sur lui-même du satellite en repère inertiel de norme strictement supérieure à 2.|*ω*₀| et égale ou inférieure à 4.|*ω*₀ |, *ω*₀ étant la pulsation orbitale du satellite 10 en repère inertiel. Bien entendu, cette vitesse est atteinte au terme d'une période de convergence, au cours de laquelle la vitesse de rotation inertielle du satellite est variable, pouvant prendre des valeurs respectivement inférieures, voire nulles, ou des valeurs supérieures à cette vitesse atteinte à l'issue de la période de convergence.

Lors de l'étape 200, la vitesse de rotation inertielle du satellite, selon les trois axes du repère inertiel, est mesurée. Le fait de mesurer la vitesse inertielle permet d'obtenir une information sur la vitesse de déplacement relative entre le Soleil et le satellite. Cette mesure est avantageusement réalisée par un gyroscope 17, dont la mesure présente un haut niveau de précision, et le temps de réponse est faible, i.e. de l'ordre de moins de 100 millisecondes, et permet donc un temps de réaction faible pour la mise en œuvre de l'étape 300.

La mesure de la vitesse de rotation inertielle du satellite est mise en œuvre de façon répétée à une fréquence déterminée pendant la mise en œuvre de la loi de commande 100 décrite ci-avant. Par exemple, la fréquence d'acquisition de cette vitesse est avantageusement d'au moins une fois par seconde, elle peut par exemple être comprise entre 1Hz et 20Hz.

La norme de la vitesse de rotation inertielle ainsi mesurée est, à chaque itération de l'étape 200, comparée à un seuil dit de déclenchement T₁, pour la mise en œuvre de l'étape 300, qui comprend la commande des actionneurs inertiels 16 de manière à augmenter la norme de la vitesse de rotation inertielle du satellite 10, lorsque la norme de la vitesse est ou devient inférieure à ce seuil de déclenchement.

Le seuil de déclenchement T₁ est défini par une valeur de vitesse de rotation inertielle du satellite. Dans des modes de réalisation, cette valeur correspond à une valeur minimale de vitesse de rotation inertielle en-deçà de laquelle une exposition de l'instrument au Soleil serait trop longue et donc susceptible de dégrader l'instrument. Avantageusement, la valeur du seuil de déclenchement T₁ est donc déterminée en fonction d'un temps maximal autorisé d'exposition de l'instrument au Soleil, éventuellement ajouté d'une marge de sécurité. A titre d'exemple non limitatif, la valeur de vitesse correspondant au seuil de déclenchement T₁ peut être comprise par exemple entre 5 et 15 mrad/s.

Lors de l'étape 300, les actionneurs inertiels sont commandés pour générer un moment cinétique incrémental (i.e. qui s'ajoute au moment cinétique déjà généré par ces actionneurs le cas échéant), de norme et de direction déterminées, pour augmenter la norme de la vitesse de rotation inertielle. Le fait d'augmenter la norme de la vitesse correspond donc à l'ajout, à la vitesse mesurée, d'un incrément de vitesse de norme déterminée, et dont la direction correspond à celle de la vitesse de rotation inertielle instantanée du satellite. Ainsi, l'axe de rotation du satellite n'est pas modifié, et la rotation n'est donc pas perturbée mais seulement accélérée si elle atteint le seuil de déclenchement.

On note dans la suite Δω_{inc} le vecteur correspondant à l'incrément de vitesse du satellite. En considérant un incrément Δω_{inc} cible de vitesse de rotation pour le satellite, cet incrément est lié au vecteur d'incrément ΔHₘₒₘ du moment cinétique commandé aux actionneurs inertiels comme suit : $Δ {H}_{Mom} = {I}_{sat} ∗ Δ {ω}_{inc}$

Où Δ*H_{Mom}* est l'incrément de moment cinétique incrémental, et *Iₛₐₜ* est la matrice d'inertie du satellite.

Dans des modes de réalisation, et en référence à la figure 3, la norme de l'incrément de moment cinétique, notée ∥Δ*H_{Mom}*∥ (et donc la norme de l'incrément de vitesse) est une fonction décroissante de la vitesse mesurée, comprise entre une valeur maximale d'incrément, atteinte par exemple pour une vitesse nulle, et une valeur nulle, qui est atteinte quand la vitesse de rotation inertielle mesurée est égale au seuil de déclenchement T₁. En d'autres termes, en considérant un satellite 10 dont la vitesse de rotation inertielle diminue progressivement jusqu'à atteindre le seuil de déclenchement T₁, la norme du moment cinétique incrémental ∥Δ*H_{Mom}*∥ commandé aux actionneurs inertiels 16 augmente progressivement à mesure que la vitesse de rotation du satellite diminue, de sorte à réaliser une correction plus forte de la vitesse si celle-ci devient trop basse.

Dans des modes de réalisation, cette fonction est une fonction continue, sur au moins deux ordres de dérivation, au point où la valeur de la vitesse de rotation inertielle est égale au seuil de déclenchement T₁. Par exemple, la fonction peut être une fonction puissance d'ordre 2 ou plus, ou une fonction exponentielle. Ceci permet de réaliser une accélération progressive et d'éviter des phénomènes de variation de vitesse trop brusques, qui pourraient avoir pour effet de détériorer certains équipements embarqués dans le satellite 10.

Dans des modes de réalisation, et comme représenté dans l'exemple de la figure 3, la norme de l'incrément de moment cinétique est constante, et égale à la valeur maximale d'incrément, lorsque la norme de la vitesse de rotation inertielle est inférieure à un deuxième seuil T₂, inférieur au seuil de déclenchement, c'est-à-dire lorsque cette norme est comprise entre 0 et T₂. En d'autres termes,
- entre des vitesses comprises entre T₁ et T₂: plus la vitesse du satellite est basse, plus la norme de l'incrément de moment cinétique est élevée,
- entre des vitesses comprises entre 0 et T₂: la norme de l'incrément de moment cinétique est constante et maximale.

Ainsi, on assure l'application d'un incrément maximal pour toutes les vitesses comprises entre 0 et T₂, ce qui permet d'assurer une correction très rapide pour une plage de vitesse où le risque d'endommagement en cas d'éblouissement est particulièrement élevé.

La norme de l'incrément du moment cinétique est ainsi déterminée.

La direction de l'incrément du moment cinétique, notée *u_{Mom}*, est donnée par *u_{Mom} = Iₛₐₜ * u_{Rate},* avec *Iₛₐₜ* la matrice d'inertie du satellite et *u_{Rate}* la direction de l'incrément de vitesse souhaitée. *u_{Rate}* est choisie égale à la direction de la vitesse de rotation naturelle du satellite, notée *ωₙₐₜ,* qui correspond à la dernière vitesse de rotation inertielle mesurée du satellite, de laquelle est déduit le moment cinétique incrémental Δ*ω_{inc,prev}* appliqué à la précédente itération de l'étape 300 de commande des actionneurs inertiels : ${ω}_{nat} = {ω}_{sat / I} - Δ {ω}_{inc , prev}$

On peut observer de l'équation qui précède que dans certains cas, où la vitesse de rotation inertielle du satellite est trop faible, la direction de l'incrément du moment cinétique peut ne pas être déterminable pour cause de divergence du calcul. Dans ce cas, le procédé prévoit avantageusement que lorsque la vitesse de rotation inertielle mesurée est inférieure à un seuil de sécurité T_{S}, la direction du moment cinétique incrémental n'est pas recalculée, mais on reprend la dernière direction de moment cinétique incrémental déterminée lors d'une itération précédente de l'étape 300 de commande des actionneurs inertiel. On procède ainsi à un verrouillage 310 de la direction de l'incrément de moment cinétique jusqu'à retrouver une vitesse de rotation inertielle du satellite qui permette à nouveau le calcul de cette direction. Le seuil de sécurité Tₛ est inférieur au seuil T₁ de déclenchement de l'augmentation de la vitesse du satellite. Il est par exemple inférieur à 1mrad/s.

Dans des modes de réalisation, lorsque la vitesse de rotation inertielle du satellite redevient supérieure au seuil de sécurité Tₛ, la direction calculée au moins pour la prochaine mise en œuvre de l'étape 300 peut être déterminée 320 par interpolation temporelle entre la dernière direction de moment cinétique incrémental commandée aux actionneurs inertiels (i.e. lors de la précédente itération de l'étape 300, y compris en cas de verrouillage 310 comme indiquée ci-avant) et la direction de vitesse de rotation naturelle du satellite décrite ci-avant. Dans des modes de réalisation, ce mode de calcul de la direction est utilisé pour plus d'une mise en œuvre de l'étape 300 suivant le retour de la vitesse de rotation inertielle à un niveau supérieur au seuil Tₛ. Il peut par exemple être utilisé pendant une période de temps déterminée ou pour un nombre déterminé d'itérations de cette étape. Ceci permet de sortir de l'état de verrouillage 310 de la direction en assurant un changement de direction progressif de l'incrément de vitesse de rotation, et permet de limiter les perturbations sur la loi de contrôle ainsi que les risques d'endommagement des équipements embarqués à bord du satellite.

L'interpolation 320 peut par exemple être une interpolation linéaire (LERP) ou linéaire sphérique (SLERP) qui sont des techniques d'interpolation classiques.

En référence aux figures 4a et 4b, on a représenté un exemple de trajectoire du Soleil par rapport à un instrument optique monté sur un satellite mettant en œuvre un contrôle d'attitude respectivement avec et sans l'augmentation de la norme de la vitesse de rotation inertielle du satellite quand celle-ci devient inférieure au seuil de déclenchement T₁. Sur ces figures, la trajectoire du Soleil est représentée par une courbe, sur une sphère qui représente l'ensemble des coordonnées sphériques autour de l'instrument, représenté au centre. Le cercle pointillé centré sur l'axe de visée correspond au cône d'éblouissement de l'instrument optique, qui ne doit pas être orienté vers le Soleil au-delà d'une durée déterminée. Les nuances de gris de la trajectoire du satellite correspondent à des valeurs de vitesse de rotation inertielle du satellite, de sorte que plus la trajectoire est foncée, plus la vitesse est lente, et donc plus le temps passé à la position considérée est important.

Dans le cas de la figure 4a, on remarque ainsi qu'une partie de la trajectoire du Soleil passe par le cône d'éblouissement, et pour des valeurs de vitesse basses, donc potentiellement préjudiciables à l'instrument. Dans le cas de la figure 4b, on remarque que la vitesse du Soleil reste dans des valeurs élevées, grâce à l'accélération apportée selon la description qui précède. Ainsi, même si le Soleil passe dans le cône d'éblouissement de l'instrument optique, il le fait à une vitesse suffisamment élevée pour ne pas endommager l'instrument.

Le procédé proposé permet donc, en appliquant une augmentation de la vitesse de rotation inertielle du satellite 10 chaque fois que celle-ci devient inférieure à un seuil prédéterminé, d'éviter des risques d'éblouissement, sans avoir besoin de connaître la position de l'instrument par rapport au soleil. En effet, cette augmentation de la vitesse est mise en œuvre sans connaissance ou condition appliquée sur l'orientation de l'instrument.

## Revendications

1. Procédé de contrôle d'attitude d'un satellite en orbite basse en mode survie, le satellite comprenant un instrument sensible au rayonnement solaire, le procédé comportant :
- la mise en oeuvre (100) d'un contrôle d'attitude utilisant une loi de contrôle selon laquelle :
o des magnéto-coupleurs, adaptés à former des moments magnétiques internes dans un repère satellite, sont commandés en fonction d'une mesure du champ magnétique terrestre par des magnétomètres, pour limiter les variations du champ magnétique terrestre,
o un moment cinétique interne est commandé selon un axe déterminé, le moment cinétique interne étant d'une norme minimum fonction d'au moins l'inertie du satellite,
le procédé comportant en outre :
- la mesure (200) d'une norme et d'une direction d'une vitesse de rotation inertielle instantanée du satellite, par un équipement de mesure d'une vitesse de rotation inertielle du satellite et
- au moins lorsque la norme de la vitesse de rotation inertielle mesurée est inférieure à une valeur correspondant à un seuil de déclenchement prédéterminé en fonction d'un temps maximal autorisé d'exposition de l'instrument au soleil, la commande (300) d'actionneurs inertiels adaptés à former des moments cinétiques internes dans ledit repère satellite, pour augmenter la norme de la vitesse de rotation inertielle du satellite, d'un incrément de vitesse de norme déterminée, et dont la direction correspond à celle de la vitesse de rotation inertielle instantanée du satellite.

2. Procédé selon la revendication 1, dans lequel, lorsque la vitesse de rotation inertielle mesurée est inférieure au seuil de déclenchement prédéterminé, les actionneurs inertiels sont commandés (300) pour générer un moment cinétique incrémental de norme et de direction déterminées.

3. Procédé selon la revendication 1 ou 2, dans lequel la norme du moment cinétique incrémental est une fonction décroissante de la vitesse mesurée, comprise entre une valeur maximale d'incrément et une valeur nulle quand la vitesse de rotation inertielle mesurée est égale au seuil de déclenchement.

4. Procédé selon la revendication 3, dans lequel la fonction décroissante de la vitesse mesurée est continue en la valeur de vitesse de rotation inertielle correspondant au seuil de déclenchement sur au moins deux ordres de dérivation.

5. Procédé selon la revendication 4, dans lequel la fonction décroissante de la vitesse mesurée est une fonction puissance d'ordre au moins 2 ou une fonction exponentielle.

6. Procédé selon l'une des revendications 3 à 5, dans laquelle la norme du moment cinétique incrémental est constante et égale à la valeur maximale lorsque la vitesse de rotation inertielle mesurée est inférieure ou égale à un deuxième seuil, inférieur au seuil de déclenchement.

7. Procédé selon l'une des revendications 2 à 6, dans lequel les étapes de mesure (200) et de commande (300) des actionneurs inertiels sont itératives, et la direction du moment cinétique incrémental est égale à l'inertie satellite multipliée par la direction de vitesse de rotation naturelle du satellite, correspondant à la direction de la vitesse de rotation inertielle mesurée du satellite de laquelle est déduit le moment cinétique incrémental appliqué à la précédente itération de l'étape de commande des actionneurs inertiels.

8. Procédé selon l'une des revendications précédentes, dans lequel les étapes de mesure (200) et de commande (300) des actionneurs inertiels sont itératives et, lorsque la vitesse de rotation inertielle mesurée est inférieure à un seuil de sécurité (Tₛ) inférieur au seuil de déclenchement, la direction du moment cinétique incrémental est la dernière direction de moment cinétique incrémental déterminée lors d'une itération précédente de l'étape de commande des actionneurs inertiel.

9. Procédé selon la revendication 8, dans lequel, lorsque la vitesse de rotation inertielle mesurée devient supérieure au seuil de sécurité (Tₛ), la direction du moment cinétique incrémental est déterminée par interpolation temporelle entre la dernière direction de moment cinétique incrémental commandée aux actionneurs inertiels et la direction de vitesse de rotation naturelle du satellite.

10. Procédé selon l'une des revendications précédentes, dans lequel la loi de contrôle est une loi en B point biaisée.

11. Satellite (10) destiné à être placé en orbite basse inclinée, comportant au moins un instrument (14) sensible au rayonnement solaire, des magnéto-coupleurs (15) adaptés à former des moments magnétiques internes dans un repère satellite, des actionneurs inertiels (16) adaptés à former des moments cinétiques internes dans ledit repère satellite et des magnétomètres adaptés à mesurer le champ magnétique terrestre, ledit satellite (10) comportant en outre un équipement de mesure (17) d'une vitesse de rotation inertielle du satellite et un module de commande des magnéto-coupleurs et des actionneurs inertiels, ledit module de commande étant configuré pour mettre en œuvre un procédé de contrôle d'attitude en mode survie selon l'une quelconque des revendications précédentes.

12. Satellite selon la revendication précédente, dans lequel les actionneurs inertiels (16) sont des roues à réaction.

13. Satellite selon la revendication 11 ou 12, dans lequel l'équipement de mesure (17) d'une vitesse de rotation inertielle du satellite est un gyroscope.

14. Produit programme d'ordinateur, comportant un ensemble d'instructions de code de programme qui, lorsqu'elles sont exécutées dans un satellite selon l'une quelconque des revendications 11-13, dans le module, configurent ledit satellite pour mettre en œuvre le procédé de contrôle d'attitude en mode survie selon l'une quelconque des revendications 1 à 10.

## Patentansprüche

1. Verfahren zur Lageregelung eines Satelliten in einer niedrigen Erdumlaufbahn im Überlebensmodus, wobei der Satellit ein auf Sonnenstrahlung empfindliches Instrument umfasst, wobei das Verfahren Folgendes umfasst:
- die Durchführung (100) einer Lageregelung unter Verwendung eines Regelungsgesetzes, nach dem:
○ Magnetspulen, die dazu ausgelegt sind, interne magnetische Momente in einem Satellitenbezugssystem zu bilden, in Abhängigkeit von einer Messung des Erdmagnetfeldes durch Magnetometer gesteuert werden, um die Schwankungen des Erdmagnetfeldes zu begrenzen,
○ ein interner Drehimpuls entlang einer bestimmten Achse gesteuert wird, wobei der interne Drehimpuls eine minimale Norm in Abhängigkeit von mindestens der Trägheit des Satelliten aufweist,
wobei das Verfahren ferner Folgendes umfasst:
- das Messen (200) einer Norm und einer Richtung einer momentanen inertialen Rotationsgeschwindigkeit des Satelliten durch eine Messausrüstung für eine inertiale Rotationsgeschwindigkeit des Satelliten und
- zumindest wenn die Norm der gemessenen inertialen Rotationsgeschwindigkeit niedriger ist als ein Wert, der einer vorbestimmten Auslöseschwelle in Abhängigkeit von einer maximal zulässigen Belichtungszeit des Instruments gegenüber der Sonne entspricht, das Steuern (300) von Trägheitsaktuatoren, die dazu ausgelegt sind, interne Drehimpulse in dem besagten Satellitenbezugssystem zu bilden, um die Norm der inertialen Rotationsgeschwindigkeit des Satelliten um ein Geschwindigkeitsinkrement mit bestimmter Norm zu erhöhen, und dessen Richtung der der momentanen inertialen Rotationsgeschwindigkeit des Satelliten entspricht.

2. Verfahren nach Anspruch 1, wobei, wenn die gemessene inertiale Rotationsgeschwindigkeit niedriger als die vorbestimmte Auslöseschwelle ist, die Trägheitsaktuatoren gesteuert (300) werden, um einen inkrementellen Drehimpuls mit bestimmter Norm und Richtung zu erzeugen.

3. Verfahren nach Anspruch 1 oder 2, wobei die Norm des inkrementellen Drehimpulses eine abnehmende Funktion der gemessenen Geschwindigkeit ist, die zwischen einem maximalen Inkrementwert und einem Nullwert liegt, wenn die gemessene inertiale Rotationsgeschwindigkeit gleich der Auslöseschwelle ist.

4. Verfahren nach Anspruch 3, wobei die abnehmende Funktion der gemessenen Geschwindigkeit am Wert der inertialen Rotationsgeschwindigkeit, der der Auslöseschwelle entspricht, über mindestens zwei Ableitungsordnungen stetig ist.

5. Verfahren nach Anspruch 4, wobei die abnehmende Funktion der gemessenen Geschwindigkeit eine Potenzfunktion der Ordnung mindestens 2 oder eine Exponentialfunktion ist.

6. Verfahren nach einem der Ansprüche 3 bis 5, wobei die Norm des inkrementellen Drehimpulses konstant und gleich dem Maximalwert ist, wenn die gemessene inertiale Rotationsgeschwindigkeit kleiner oder gleich einer zweiten Schwelle ist, die niedriger als die Auslöseschwelle ist.

7. Verfahren nach einem der Ansprüche 2 bis 6, wobei die Schritte des Messens (200) und des Steuerns (300) der Trägheitsaktuatoren iterativ sind und die Richtung des inkrementellen Drehimpulses gleich der mit der Richtung der natürlichen Rotationsgeschwindigkeit des Satelliten multiplizierten Satellitentrögheit ist, die der Richtung der gemessenen inertialen Rotationsgeschwindigkeit des Satelliten entspricht, aus der der in der vorhergehenden Iteration des Schritts zum Steuern der Trägheitsaktuatoren angelegte inkrementelle Drehimpuls abgeleitet wird.

8. Verfahren nach einem der vorhergehenden Ansprüche, wobei die Schritte des Messens (200) und des Steuerns (300) der Trägheitsaktuatoren iterativ sind und, wenn die gemessene inertiale Rotationsgeschwindigkeit niedriger als eine Sicherheitsschwelle (Ts) ist, die niedriger als die Auslöseschwelle ist, die Richtung des inkrementellen Drehimpulses die letzte Richtung des inkrementellen Drehimpulses ist, die während einer vorhergehenden Iteration des Schritts zum Steuern der Trägheitsaktuatoren bestimmt wurde.

9. Verfahren nach Anspruch 8, wobei, wenn die gemessene inertiale Rotationsgeschwindigkeit größer als die Sicherheitsschwelle (Ts) wird, die Richtung des inkrementellen Drehimpulses durch Zeitinterpolation zwischen der letzten Richtung des inkrementellen Drehimpulses, die den Trägheitsaktuatoren befohlen wurde, und der Richtung der natürlichen Rotationsgeschwindigkeit des Satelliten bestimmt wird.

10. Verfahren nach einem der vorhergehenden Ansprüche, wobei das Regelungsgesetz ein vorgespanntes B-Punkt-Gesetz ist.

11. Ein Satellit (10), der dazu bestimmt ist, in eine geneigte niedrige Erdumlaufbahn gebracht zu werden, umfassend mindestens ein auf Sonnenstrahlung empfindliches Instrument (14), Magnetspulen (15), die dazu ausgelegt sind, interne magnetische Momente in einem Satellitenbezugssystem zu bilden, Trägheitsaktuatoren (16), die dazu ausgelegt sind, interne Drehimpulse in dem besagten Satellitenbezugssystem zu bilden, und Magnetometer, die dazu ausgelegt sind, das Erdmagnetfeld zu messen, wobei der besagte Satellit (10) ferner eine Messausrüstung (17) für eine inertiale Rotationsgeschwindigkeit des Satelliten und ein Steuermodul für die Magnetspulen und Trägheitsaktuatoren umfasst, wobei das besagte Steuermodul konfiguriert ist, um ein Verfahren zur Lageregelung im Überlebensmodus nach einem der vorhergehenden Ansprüche durchzuführen.

12. Satellit nach dem vorhergehenden Anspruch, wobei die Trägheitsaktuatoren (16) Reaktionsräder sind.

13. Satellit nach Anspruch 11 oder 12, wobei die Messausrüstung (17) für eine inertiale Rotationsgeschwindigkeit des Satelliten ein Gyroskop ist.

14. Computerprogrammprodukt, umfassend einen Satz von Programmcodeanweisungen, die, wenn sie in einem Satelliten nach einem der Ansprüche 11-13 ausgeführt werden, in dem Modul den besagten Satelliten so konfigurieren, dass er das Verfahren zur Lageregelung im Überlebensmodus nach einem der Ansprüche 1 bis 10 durchführt.

## Claims

1. An attitude control method for a low-orbit satellite in survival mode, the satellite comprising an instrument sensitive to solar radiation, the method comprising:
implementing (100) an attitude control using a control law according to which:
- magnetorquers, adapted to form internal magnetic moments in a satellite frame, are controlled as a function of a measurement of the Earth's magnetic field by magnetometers, to limit variations of the Earth's magnetic field,
- an internal angular momentum is controlled along a determined axis, the internal angular momentum having a minimum norm as a function of at least the inertia of the satellite,
the method further comprising:
measuring (200) a norm and a direction of an instantaneous inertial rotation speed of the satellite, by a measurement equipment of an inertial rotation speed of the satellite and
at least when the norm of the measured inertial rotation speed is lower than a value corresponding to a predetermined trigger threshold as a function of a maximum authorized exposure time of the instrument to the sun, commanding (300) inertial actuators adapted to form internal angular momenta in said satellite frame, to increase the norm of the inertial rotation speed of the satellite, by a speed increment of determined norm, and the direction of which corresponds to that of the instantaneous inertial rotation speed of the satellite.

2. The method according to claim 1, wherein, when the measured inertial rotation speed is lower than the predetermined trigger threshold, the inertial actuators are controlled (300) to generate an incremental angular momentum of determined norm and direction.

3. The method according to claim 1 or 2, wherein the norm of the incremental angular momentum is a decreasing function of the measured speed, comprised between a maximum increment value and a null value when the measured inertial rotation speed is equal to the trigger threshold.

4. The method according to claim 3, wherein the decreasing function of the measured speed is continuous at the value of inertial rotation speed corresponding to the trigger threshold over at least two orders of derivation.

5. The method according to claim 4, wherein the decreasing function of the measured speed is a power function of order at least 2 or an exponential function.

6. The method according to one of claims 3 to 5, wherein the norm of the incremental angular momentum is constant and equal to the maximum value when the measured inertial rotation speed is lower than or equal to a second threshold, lower than the trigger threshold.

7. The method according to one of claims 2 to 6, wherein the steps of measuring (200) and commanding (300) the inertial actuators are iterative, and the direction of the incremental angular momentum is equal to the satellite inertia multiplied by the direction of the natural rotation speed of the satellite, corresponding to the direction of the measured inertial rotation speed of the satellite from which the incremental angular momentum applied in the previous iteration of the step of commanding the inertial actuators is deduced.

8. The method according to one of the preceding claims, wherein the steps of measuring (200) and commanding (300) the inertial actuators are iterative and, when the measured inertial rotation speed is lower than a safety threshold (Ts) lower than the trigger threshold, the direction of the incremental angular momentum is the last direction of incremental angular momentum determined during a preceding iteration of the step of commanding the inertial actuators.

9. The method according to claim 8, wherein, when the measured inertial rotation speed becomes greater than the safety threshold (Ts), the direction of the incremental angular momentum is determined by time interpolation between the last direction of incremental angular momentum commanded to the inertial actuators and the direction of the natural rotation speed of the satellite.

10. The method according to one of the preceding claims, wherein the control law is a biased B-dot law.

11. A satellite (10) intended to be placed in an inclined low orbit, comprising at least one instrument (14) sensitive to solar radiation, magnetorquers (15) adapted to form internal magnetic moments in a satellite frame, inertial actuators (16) adapted to form internal angular momenta in said satellite frame and magnetometers adapted to measure the Earth's magnetic field, said satellite (10) further comprising a measurement equipment (17) for an inertial rotation speed of the satellite and a control module for the magnetorquers and inertial actuators, said control module being configured to implement an attitude control method in survival mode according to any one of the preceding claims.

12. The satellite according to the preceding claim, wherein the inertial actuators (16) are reaction wheels.

13. The satellite according to claim 11 or 12, wherein the measurement equipment (17) for an inertial rotation speed of the satellite is a gyroscope.

14. A computer program product, comprising a set of program code instructions which, when executed in a satellite according to any one of claims 11-13, configure, in the module, said satellite to implement the attitude control method in survival mode according to any one of claims 1 to 10.
